# FASCICULE DE BREVET EUROPEEN

(11) **EP 3 858 586 B1**
(45) Date de publication et mention de la délivrance du brevet: **18.09.2024**
(21) Numéro de dépôt: 21152880.7
(22) Date de dépôt: 22.01.2021
(51) Int. Cl.: B29C 70/46, B29D 99/00, B29C 70/38, B29L 31/30, B64C 1/26, B29C 53/06, B29C 53/84, B64C 3/18, B64C 3/20, B64C 1/00, B64F 5/10

(54) **PROCÉDÉ DE FABRICATION D'UN CAISSON CENTRAL DE VOILURE D'AÉRONEF EN MATÉRIAU COMPOSITE**
VERFAHREN ZUR HERSTELLUNG EINES FLÜGELMITTELKASTENS EINES FLUGZEUGS AUS VERBUNDMATERIAL
METHOD FOR MANUFACTURING A CENTRAL UNIT OF AN AIRCRAFT WING MADE FROM COMPOSITE MATERIAL

(30) Priorité: 29.01.2020 FR 2000883
(43) Date de publication de la demande: 04.08.2021
(73) Titulaire: Airbus Operations SAS, 31060 Toulouse (FR)
(72) Inventeur: PRIDIE, Jago, 31060 TOULOUSE (FR)
(74) Mandataire: Cabinet Le Guen Maillet

(56) Documents cités:
- EP-A1- 3 530 444
- WO-A2-2010/040934
- US-A1- 2004 043 196
- US-A1- 2006 231 981
- US-A1- 2014 103 585
- US-A1- 2015 166 743
- ANONYMOUS: "Composite materials guide: Manufacturing > Resin Film Infusion - NetComposites", COMPOSITES WORLD NETCOMPOSITES, 24 January 2019 (2019-01-24), Chesterfield, UK, XP055739989, Retrieved from the Internet <URL:https://netcomposites.com/guide/manufacturing/resin-film-infusion/> [retrieved on 20201014]

## Description

### DOMAINE TECHNIQUE

L'invention concerne un procédé de fabrication d'un caisson central de voilure d'aéronef, un tel caisson étant implanté en partie inférieure du fuselage pour assurer le raccordement mécanique du fuselage de l'aéronef avec ses ailes.

### ÉTAT DE LA TECHNIQUE ANTÉRIEURE

La structure d'un aéronef comprend notamment deux sous-ensembles, d'une part un fuselage, et d'autre part deux ailes qui sont reliés par l'intermédiaire d'une structure appelée caisson central de voilure.

Cette structure centrale, en forme de manchon sensiblement parallélépipédique est implantée en partie inférieure du fuselage de l'aéronef, dans sa région centrale. Elle s'étend transversalement par rapport à ce fuselage, de manière à avoir ses ouvertures latérales débouchant de part et d'autre de ce fuselage, chaque ouverture recevant une extrémité d'aile pour assurer sa solidarisation au fuselage.

Un tel caisson comporte une armature en matériau composite formée d'une série de traverses à section en U accolées les unes aux autres, de manière à délimiter approximativement une paroi supérieure, une paroi inférieure ainsi qu'une paroi amont et une paroi aval, raccordées les unes aux autres pour délimiter conjointement la forme de manchon parallélépipédique tout en lui conférant une rigidité importante.

L'ensemble est recouvert d'une peau extérieure, elle-même en matériau composite, obtenue par exemple par enroulement de fibres autour de l'ensemble formé par les traverses portées par un mandrin parallélépipédique. Ces fibres sont imprégnées de résine avant de placer le tout dans un autoclave de polymérisation.

D'une manière générale, la fabrication des traverses doit à la fois respecter des tolérances dimensionnelles contraignantes pour pouvoir assembler l'ensemble, et être mise en oeuvre à une cadence de production élevée. En pratique, ces traverses sont fabriquées en formant un empilement de couches de fibres préimprégnées les unes sur les autres, avec une installation automatisée. Cet empilement est ensuite polymérisé pour former la traverse. Les couches de fibres préimprégnées sont un matériau disponible dans le commerce, usuellement dénommé « prepreg » ou « prepeg », comportant une couche de fibres éventuellement tissées préimprégnées sur toute son épaisseur de résine thermostable.

Néanmoins, la réalisation d'un empilement de couches de fibres préimprégnées de type prepreg avec une installation automatisée s'avère problématique du fait qu'une telle installation est coûteuse, et qu'elle ne permet pas d'atteindre des cadences de production satisfaisantes. Ceci est dû au fait que les couches de fibres à manipuler sont collantes du fait qu'elles sont préimprégnées de résine, ce qui complique signifiativement leur manipulation par une installation automatisée. EP-A-3 530 444 et WO-A-2010/040934 divulguent ensemble un procédé selon le préambule de la revendication 1.

L'invention a pour objet un procédé optimisé de fabrication des traverses à section en U utilisées pour la fabrication d'un tel caisson, permettant d'assurer une cadence de production élevée.

### EXPOSÉ DE L'INVENTION

A cet effet, l'invention a pour objet un procédé de fabrication d'un caisson central de voilure d'aéronef selon la revendication 1.

Avec cette solution, les couches de fibres manipulées sont des couches de fibres sèches, de sorte que leur manipulation par une machine automatisée peut être assurée pour un coût raisonnable et à une cadence élevée. La dépose de films de résine portés par des feuilles amovibles, c'est-à-dire dont l'une des faces n'est pas collante, simplifie la manipulation par une installation automatisée.

L'invention a également pour objet un procédé ainsi défini, comprenant une étape de pré-polymérisation de la résine présente dans l'empilement de couches pressées.

L'invention a également pour objet un procédé ainsi défini, dans lequel l'étape de prépolymérisation est intégrée à l'étape de pressage.

.

L'invention a également pour objet un procédé ainsi défini, comportant une étape de découpe de l'empilement de couches plan en plusieurs bandes correspondant chacune à une traverse.

### BRÈVE DESCRIPTION DES DESSINS

La figure 1 est une vue d'ensemble en perspective d'un aéronef intégrant un caisson central de voilure ;
La figure 2 est une vue d'ensemble en perspective d'un caisson central de voilure représenté seul ;
La figure 3 est une vue en coupe longitudinale d'un caisson central de voilure ;
La figure 4 est une vue en coupe longitudinale d'une portion de caisson central de voilure en cours de fabrication ;
La figure 5 est une vue d'ensemble en perspective d'une phase d'enroulement de fibres autour d'une armature de caisson pour former sa peau ;
La figure 6 est une vue en perspective d'une traverse utilisée pour former l'armature d'un caisson ;
La figure 7 est une vue en perspective d'une couche de fibres plane représentée seule ;
La figure 8 est une vue en perspective de l'application sur une couche de fibres planes d'un film de résine porté par une feuille amovible ;
La figure 9 est une vue en perspective d'un film de résine appliqué sur une couche de fibres après retrait de la feuille amovible ;
La figure 10 est une représentation schématique en perspective de l'empilement de couche en cours d'établissement pour fabriquer les traverses conformément à l'invention ;
La figure 11 est une représentation schématique en perspective d'un empilement de couches plan terminé avant découpe en vue de la mise en forme de plusieurs traverses ;
La figure 12 est une vue en coupe d'une presse utilisée pour former une traverse à section en U en matériau composite conformément à l'invention ;
La figure 13 est une vue en coupe d'une presse en cours de mise en forme d'une traverse selon l'invention ;
La figure 14 est une vue en coupe d'une presse terminant la mise en forme d'une traverse selon l'invention.

### EXPOSÉ DÉTAILLÉ DE MODES DE RÉALISATION PARTICULIERS

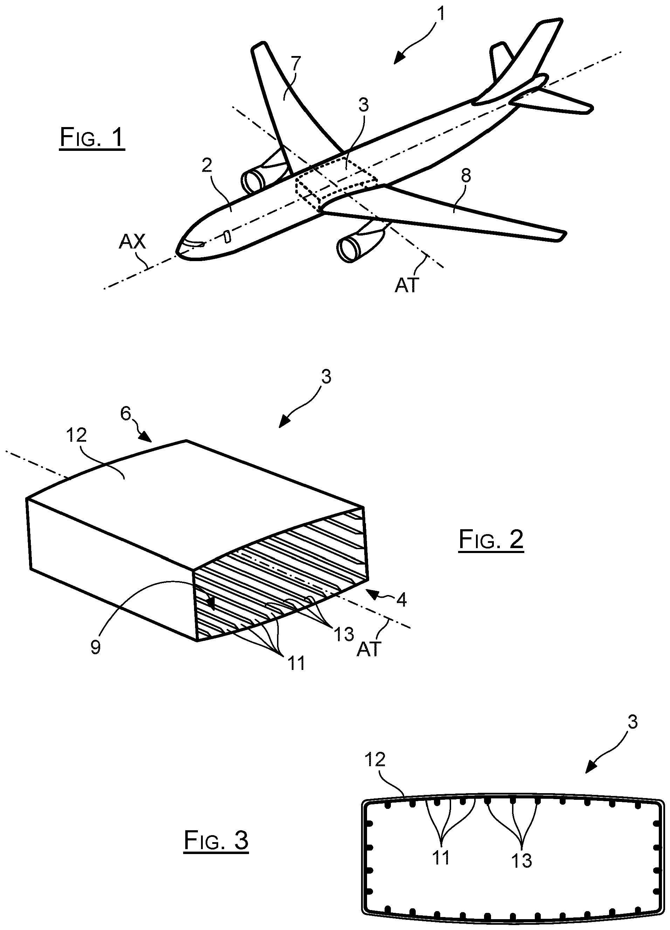

Sur la figure 1, un aéronef 1 comporte un fuselage 2 généralement cylindrique, s'étendant selon une direction longitudinale AX, et qui intègre, en partie inférieure de sa région centrale, un caisson central de voilure repéré par 3.

Ce caisson central 3 a une forme générale de manchon sensiblement parallélépipédique, s'étendant transversalement selon une direction notée AT, perpendiculaire à la direction longitudinale AX. Ce caisson central 3 en forme de manchon comporte ainsi deux ouvertures opposées situées à chacune de ses extrémités 4 et 6, débouchant respectivement de part et d'autre du fuselage pour recevoir chacune une aile de l'aéronef, ces ailes, repérées par 7 et 8, s'étendant approximativement selon la direction transversale AT.

Comme visible sur les figures 2 et 3 , ce caisson central 3 comporte une armature 9, ou carcasse, formée d'un ensemble de traverses 11 à section en U rapportées les unes contre les autres pour constituer conjointement une forme de manchon parallélépipédique. Ces traverses 11 sont des éléments en matériau composite, par exemple de fibres de carbone dans une matrice de résine, et l'armature 9 que constituent ces traverses 11 est enserrée par une peau 12 elle-même en matériau composite, cette peau 12 conférant à l'ensemble la cohésion mécanique requise.

Les traverses 11 ont leurs concavités respectives tournées vers l'intérieur du caisson 3, de sorte que chaque paire de deux traverses 11 contiguës délimite au niveau de leur raccordement une nervure rigidificatrice 13 s'étendant selon la direction transversale AT et dépassant vers l'intérieur du caisson 3. Les différentes nervures 13 s'étendent ainsi parallèlement les unes aux autres, et permettent d'accroître la rigidité du caisson.

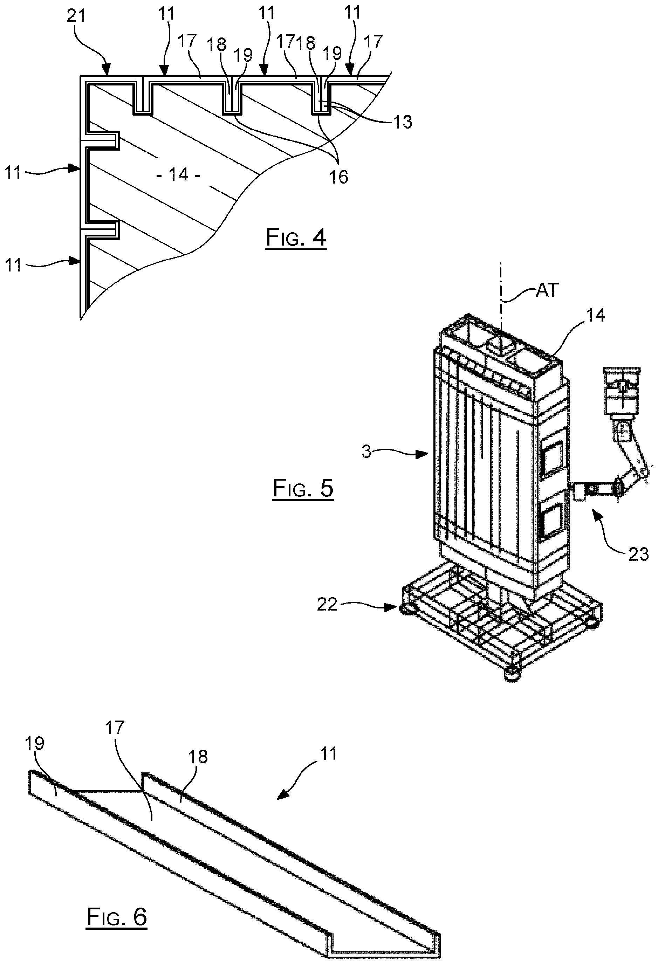

La fabrication de ce caisson est assurée en utilisant, comme visible sur les figures 4 et 5 , un mandrin 14 généralement parallélépipédique, comportant à ses faces externes des rainures 16 correspondant aux nervures 13 de manière à constituer pour les traverses 11 un support permettant de les agencer et les maintenir en position pour former et conformer l'armature 9. Concrètement, chaque traverse 11 à section en U est rapportée à la face externe du mandrin 14.

Comme illustré sur la figure 6 , chaque traverse 11 à section en U, comporte un corps 17 sous forme d'une paroi en forme de bande sensiblement plane, prolongée latéralement par deux bords 18, 19, ou branches, également en forme de bandes planes perpendiculaires au corps 17 et parallèles l'un à l'autre.

Comme visible sur la figure 4 chaque traverse 11 à section en U est rapportée sur le mandrin 14 en insérant chacun ses deux bords 18, 19 dans deux rainures correspondantes 16 de ce mandrin 14. A chaque angle du mandrin 14, on installe une traverse d'angle 21 présentant une section spécifique en C, différant de la section des traverses 11. Plus particulièrement, chaque traverse d'angle 21 comporte un fond non pas plan mais en forme de cornière, c'est-à-dire de profilé à section en L, prolongé par deux bords en forme de bandes planes opposés. Comme visible sur la figure 4, les traverses d'angles 21 permettent de raccorder les unes aux autres les faces de l'armature 9 pour constituer un ensemble ayant une forme de manchon.

Lorsque toutes les traverses 11 et 21 sont en place sur le mandrin 14, ce mandrin est installé sur un socle 22, conformément à une orientation selon laquelle l'axe AT s'étend verticalement, le socle étant équipé de moyens mécaniques permettant à ce mandrin 14, avec les traverses qu'il porte, de tourner autour de son axe AT, s'étendant verticalement durant cette opération.

A ce stade, comme illustré sur la figure 5 , des fibres de carbonne sont bobinées autour de l'ensemble de manière à former la peau 12 du caisson central 3. Cette opération est réalisée au moyen d'une tête de déroulage 23 déplaçable verticalement, le mandrin 14 tournant alors autour de son axe AT. Les fibres enroulées autour des traverses portées par le mandrin sont par exemple des fibres de carbone imbibées de résine. Il peut également s'agir de fibres de carbone sèches, la résine étant alors appliquée après bobinage des fibres.

Une fois que la peau a été constituée, l'ensemble est placé dans une installation de type autoclave, de manière à polymériser la résine de la peau avec celle des traverses pour constituer un caisson présentant une cohésion mécanique optimale, et par là-même une tenue mécanique adaptée à sa destination.

Selon l'invention, les traverses en matériau composite 11 utilisées sont fabriquées en constituant d'abord un empilement comprenant une alternance de couches de tissus de fibres de carbone et de films de résine, puis en pressant à chaud cet empilement pour lui donner une forme à section en U tout en comprimant ces couches les unes contre les autres afin entre autres que la résine impreigne efficacement les couches de tissus sur toute leur épaisseur.

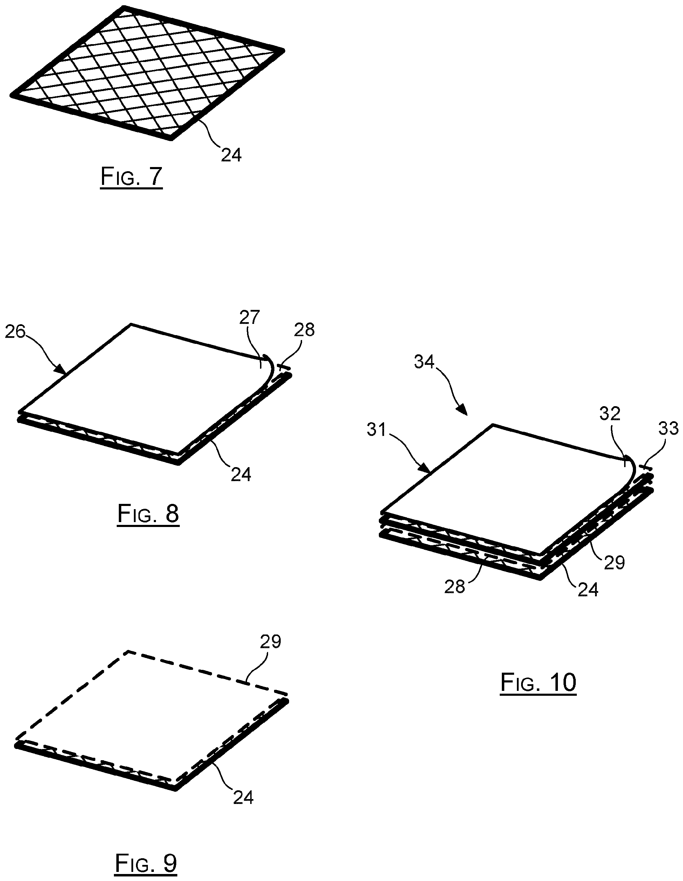

Sur la figure 7 , une couche de fibres sèches 24 plane est déposée sur un support plan non représenté, avantageusement au moyen d'une installation robotisée. Dans cet exemple, il s'agit d'un tissu de fibres de carbone d'épaisseur constante et multi axial. L'application d'une couche de fibres sèches, et non pas préimprégnée de résine, comme le matériau prepreg, facilite la dépose automatisée par un système robotisé, du fait que par opposition à une couche pré imprégnée de résine, une couche sèches n'est pas collante.

Sur cette couche 24, une couche 26 de film de résine est déposée, avantageusement au moyen d'une installation robotisée. Cette couche 26 comporte une feuille amovible 27 portant à sa face inférieure un film de résine 28 d'épaisseur prédéterminée et constante. Comme représenté schématiquement sur la figure 7 , une fois que la couche 26 est en place sur la couche 24, la feuille amovible 27 est retirée, le film de résine 28 restant lui en place sur la face supérieure de la couche de fibres 24, comme représenté sur la figure 9 .

Une autre couche de fibres sèches 29 peut alors être déposée sur le film de résine 28, pour déposer sur celle-ci une autre couche 31 de film de résine. Cette couche 31 comporte elle aussi une feuille amovible 32 qui est retirée pour laisser en place un film de résine 33 sur la couche de fibres 29.

Un empilement plan de couches comportant un certain nombre de couches de fibres, avec un film de résine interposé entre chaque paire de couches de fibres consécutives est ainsi réalisé. Le nombre de couches de fibres dépend du dimensionnement mécanique de la traverse, et l'empilement de couches est entièrement mis en oeuvre de façon automatisée ou semi-automatisée.

Selon un mode de réalisation ne faisant pas partie de l'invention, la résine est apportée sous forme liquide au lieu d'être apportée sous forme de films portés par des feuilles, ce qui peut être adapté pour certaines configurations d'installations automatisées.

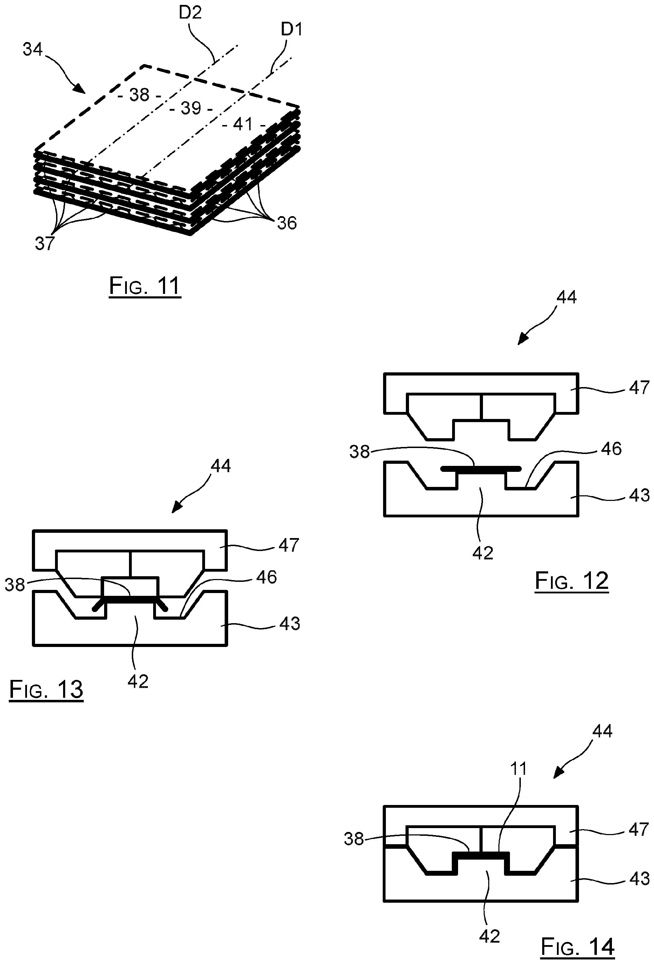

Sur la figure 11, un empilement de couches terminé, repéré par 34, comporte ainsi une alternance de couches de fibres sèches 36 et de films de résine 37, cet empilement ayant un contour carré dans cet exemple. Deux découpes rectilignes parallèles D1 et D2 sont alors réalisées dans cet empilement 34 afin de le couper sur toute son épaisseur afin de constituer trois empilements à contours rectangulaires destinés à former trois traverses 11, ces trois bandes étant repérées par 38, 39 et 41.

La bande 38 est alors installée sur une portion centrale 42 d'une empreinte inférieure 43 portée par une partie basse d'une presse 44 représentée schématiquement sur la figure 12 . Cette empreinte 43 comporte un fond 46 dont dépasse la portion centrale 42. Cette portion centrale 42 dépasse du fond 46 en ayant une forme générale rectangulaire sensiblement plus étroite que la bande 38, et plus longue que celle-ci.

Comme illustré sur la figure 12 , la bande 38 est installée de façon centrée sur la portion centrale 42, pour que les bords longs de cette bande rectangulaire s'étendant latéralement au-delà de la portion centrale 42 pour être en vis-à-vis du fond 46.

La partie haute de la presse 44 porte une empreinte supérieure 47, située verticalement en vis-à-vis de l'empreinte inférieure 43 et présente elle aussi une forme en relief, qui est complémentaire de la forme de l'empreinte inférieure 43.

Une fois que l'ensemble est en place, la presse 44 est actionnée pour abaisser l'empreinte supérieure 47 vers l'empreinte inférieure 43, comme illustré sur les figures 13 et 14 . Le début de cet abaissement provoque l'abaissement des bords de la bande 38 dépassant latéralement de la portion centrale 42, comme illustré sur la figure 13 , de manière à donner à la bande de couches empilées une forme à section en U.

En fin d'abaissement, comme illustré sur la figure 14, la bande 38 est complètement mise en forme pour présenter la section en U souhaitée. La presse 44 est alors pilotée pour accroître la pression exercée par l'empreinte supérieure 47 sur l'empreinte inférieure 43, ce qui permet de comprimer les différentes couches constitutive de la bande 38 de façon à constituer un ensemble à la fois compact et sensiblement dépourvu de bulles d'air.

Les empreintes 43 et 47 sont prévues chauffantes, pour rendre la résine plus liquide afin d'améliorer sa pénétration dans les couches de tissu, c'est-à-dire son infusion durant l'opération de mise en forme. Ce chauffage provoque également une pré polymérisation de la résine afin de solidifier partiellement la traverse 11 obtenue.

Les bandes 39 et 41 sont ensuite traitée de la même manière, de façon à former deux autres traverses 11 à section en U, préformées. Lorsque le nombre suffisant de traverses a été ainsi fabriqué, celles-ci sont installées sur le mandrin 14 de manière à constituer l'armature 9 du caisson central à fabriquer.

Lorsque toutes les traverses 11 sont en place sur le mandrin 14, celui-ci est mis en rotation autour de l'axe AT vertical, de façon à former autour des traverses une peau de fibres, par bobinage extérieur. De la résine peut être intégrée directement à cette peau par imprégnation du fil bobiné directement au cours de son enroulement, ou par toute autre technique usuelle dans ce domaine.

Lorsque l'ensemble formé par l'armature 9 portée par le mandrin 14, et entourée par la peau 12 est prêt, cet ensemble est installé dans un système de type autoclave, pour procéder à la copolymérisation de la résine des traverses 11 et de la résine de la peau 12, de manière à durcir conjointement ces différents composants pour conférer à l'ensemble une cohésion mécanique appropriée, et par là-même une tenue mécanique satisfaisante.

Autrement dit, le fait de procéder à la polymérisation conjointe des traverses et de la peau sous autoclave permet à ces éléments de se solidariser efficacement les uns aux autres pour constituer une structure générale ayant une résistance mécanique élevée.

Dans l'exemple décrit, l'invention est appliquée à la fabrication d'un caisson central de voilure. Mais d'une façon plus générale ne faisant pas partie de l'invention, le procédé décrit peut permettre la fabrication de composants comprenant des raidisseurs sous forme de traverses à section en U couvertes par une peau polymérisée sous autoclave.

D'une manière générale, l'invention permet de fabriquer des traverses en matériau composite à section en U à une cadence élevée pour un coût limité. Le fait de manipuler uniquement des couches de fibres sèches et des couches de film de résine portées par des feuilles amovibles simplifie considérablement les moyens d'automatisation nécessaires à la manipulation de ces couches, du fait qu'elles ne sont pas collantes.

Par opposition, la fabrication de ces traverses en utilisant des couches de type prepreg nécessairement collantes car imprégnées de résine, nécessite des moyens automatisés de manipulation significativement plus complexes et coûteux et ayant des cadences de production très inférieures.

## Revendications

1. Procédé de fabrication d'un caisson central (3) de voilure d'aéronef, comprenant une armature (9) formée de traverses (11) à section en U, où le procédé de fabrication comporte :
- une étape de formation de plusieurs traverses (11) à section en U,
- une étape d'installation des traverses (11) à section en U sur un mandrin porteur (14),
- une étape de bobinage de fibres composites autour des traverses (11) portées par le mandrin (14) et d'imbibation de résine pour constituer une peau (12) extérieure du caisson (3), et
- une étape de polymérisation, procédé dans lequel l'étape de formation comporte :
- une étape de constitution d'un empilement (34) comprenant au moins une couche de fibres (24, 29, 36) et un film de résine (28, 33, 37) appliqué sur cette couche de fibres (24, 29, 36) ; et
- l'application d'un film de résine (28, 33, 37) sur une couche de fibres (24, 29, 36) est obtenue par dépose d'une couche (26, 31) comprenant un film de résine (28, 33, 37) ; le procédé de fabrication étant **caractérisé en ce que** l'étape de formation comporte après l'étape de constitution d'un empilement, une étape de pressage à chaud de cet empilement (34) avec une presse pour conjointement lui conférer une forme ayant une section en U et comprimer ses couches, **en ce que** le film de résine (28, 33, 37) est porté par une feuille amovible (27, 32) retirée après dépose de la couche (26, 31);**en ce que** les fibres de l'empilement sont des fibres sèches constituées d'un tissu de fibres de carbone d'épaisseur constante et multi axial et **en ce que** l'étape de polymérisation assure une polymérisation conjointe de la peau (12) et des traverses (11).

2. Procédé selon la revendication 1, comprenant une étape de pré-polymérisation de la résine présente dans l'empilement (34) de couches pressées.

3. Procédé selon la revendication 2, dans lequel l'étape de prépolymérisation est intégrée à l'étape de pressage.

4. Procédé selon l'une des revendications précédentes, comportant une étape de découpe (D1, D2) de l'empilement de couches (34) plan en plusieurs bandes (38, 39, 41) correspondant chacune à une traverse (11).

## Patentansprüche

1. Verfahren zur Herstellung eines Flügelmittelkastens (3) eines Flugzeugs, aufweisend ein aus Querträgern (11) mit U-förmigem Querschnitt gebildetes Gerüst (9), wobei das Herstellungsverfahren umfasst:
- einen Schritt zur Bildung mehrerer Querträger (11) mit U-förmigem Querschnitt,
- einen Schritt zur Installierung der Querträger (11) mit U-förmigem Querschnitt auf einem Trägerdorn (14),
- einen Schritt zur Wicklung von Verbundfasern um die von dem Dorn (14) getragenen Querträger (11) und zur Durchtränkung mit Harz, um eine Außenhaut (12) des Kastens (3) zu schaffen, und
- einen Schritt zur Polymerisation,
wobei in dem Verfahren der Bildungsschritt umfasst:
- einen Schritt zur Schaffung eines Stapels (34), der mindestens eine Lage aus Fasern (24, 29, 36) und einen auf diese Lage aus Fasern (24, 29, 36) aufgebrachten Harzfilm (28, 33, 37) aufweist; und
- die Aufbringung eines Harzfilms (28, 33, 37) auf einer Lage aus Fasern (24, 29, 36) durch Ablage einer einen Harzfilm (28, 33, 37) aufweisenden Lage (26, 31) erzielt wird;
wobei das Herstellungsverfahren **dadurch gekennzeichnet ist, dass** der Bildungsschritt nach dem Schritt zur Schaffung eines Stapels einen Schritt zum Heißpressen dieses Stapels (34) mit einer Presse umfasst, um ihm gemeinsam eine Form mit einem U-förmigen Querschnitt zu verleihen und seine Lagen zu komprimieren, dass der Harzfilm (28, 33, 37) von einer ablösbaren Folie (27, 32) getragen wird, die nach Ablage der Lage (26, 31) abgezogen wird; dass die Fasern des Stapels trockene Fasern sind, die aus einem multiaxialen Kohlenstofffasergewebe mit konstanter Dicke geschaffen werden, und dass der Polymerisationsschritt eine gemeinsame Polymerisation der Haut (12) und der Querträger (11) gewährleistet.

2. Verfahren nach Anspruch 1, aufweisend einen Schritt zur Vorpolymerisation des in dem Stapel (34) von gepressten Lagen vorhandenen Harzes.

3. Verfahren nach Anspruch 2, wobei der Vorpolymerisationsschritt in den Pressschritt integriert ist.

4. Verfahren nach einem der vorhergehenden Ansprüche, umfassend einen Schritt zum Schneiden (D1, D2) des ebenen Stapels von Lagen (34) in mehrere Streifen (38, 39, 41), die jeweils einem Querträger (11) entsprechen.

## Claims

1. Method for manufacturing an aircraft wing center box (3), comprising a frame (9) formed from U-section crossmembers (11), wherein the manufacturing method comprises:
- a step of formation of several U-section crossmembers (11),
- a step of installation of the U-section crossmembers (11) on a bearing mandrel (14),
- a step of winding composite fibers around the crossmembers (11) carried by the mandrel (14) and of soaking of resin to form an outer skin (12) of the box (3), and
- a step of polymerization,
method in which the step of formation comprises:
- a step of constitution of a stack (34) comprising at least one layer of fibres (24, 29, 36) and a film of resin (28, 33, 37) applied to this layer of fibres (24, 29, 36); and
- the application of a resin film (28, 33, 37) to a layer of fibres (24, 29, 36) is obtained by depositing a layer (26, 31) comprising a resin film (28, 33, 37);
the manufacturing method being **characterized in that** the step of formation comprises after the step of constitution a stack, a step of hot pressing of that stack (34) with a press to jointly give it a shape having a U-shaped section and compress its layers, **in that** the resin film (28, 33, 37) is carried by a removable sheet (27, 32) removed after the layer (26, 31) has been deposited, **in that** the fibres of the stack are dry fibres consisting of a fabric of carbon fibres of constant thickness and multi-axial, and **in that** the step of polymerisation ensures a joint polymerisation of the skin (12) and of the crossmembers (11).

2. Method according to claim 1, comprising a step of pre-polymerization of the resin present in the stack (34) of pressed layers.

3. Method according to claim 2, in which the step of pre-polymerization is integrated in the step of pressing.

4. Method according to any of the preceding claims, comprising a step of cutting (D1, D2) of the stack of layers (34) flat into several strips (38, 39, 41), each corresponding to a crossmember (11).
